# EUROPÄISCHE PATENTSCHRIFT

(11) **EP 2 399 775 B1**
(45) Veröffentlichungstag und Bekanntmachung des Hinweises auf die Patenterteilung: **01.11.2017**
(21) Anmeldenummer: 11004748.7
(22) Anmeldetag: 10.06.2011
(51) Int. Cl.: B60Q 1/14, G06K 9/00

(54) **Verfahren zum Betrieb einer Kraftfahrzeugbeleuchtungseinrichtung mit automatischer Abblendfunktion**
Method for operating a motor vehicle lighting device with automated dipping function
Procédé de fonctionnement d'un dispositif d'éclairage de véhicule automobile doté d'une fonction de feu de croisement automatique

(30) Priorität: 28.06.2010 DE 102010025349
(43) Veröffentlichungstag der Anmeldung: 28.12.2011
(73) Patentinhaber: Audi AG, 85045 Ingolstadt (DE); Audi Electronics Venture GmbH, 85080 Gaimersheim (DE)
(72) Erfinder: Giesler, Björn, 85055 Ingolstadt (DE)
(74) Vertreter: Thielmann, Frank

(56) Entgegenhaltungen:
- EP-A2- 1 962 226
- WO-A1-99/14943
- DE-A1-102005 047 331
- DE-A1-102006 059 064
- DE-A1-102007 026 750
- DE-A1-102008 062 640

## Beschreibung

Die Erfindung betrifft ein Verfahren zum Betrieb einer Kraftfahrzeugbeleuchtungseinrichtung mit automatischer Abblendfunktion, umfassend wenigstens einen Scheinwerfer mit einem Leuchtmittel in Form wenigstens einer LED, eine das Kraftfahrzeugvorfeld aufnehmende digitale Bildaufnahmeeinrichtung, die zyklisch einzelne Bilder liefert, und eine mit der Bildaufnahmeeinrichtung kommunizierende Steuerungseinrichtung, die anhand der Bilder die Verkehrssituation ermittelt und in Abhängigkeit des Ermittlungsergebnisses die LED zum abblenden ansteuert.

Moderne Kraftfahrzeuge weisen immer mehr Assistenzsysteme auf, die den Fahrer unterstützen sollen. Ein bekanntes Assistenzsystem ist in Form einer automatischen Abblendfunktion realisiert. Diese Funktion dient dazu, den eigenen Scheinwerfer bzw. dessen Leuchtmittel automatisch, also ohne Interaktion des Fahrers, abzublenden, wenn ein entgegenkommendes oder vorausfahrendes Fahrzeug erfasst wird. Eine Kraftfahrzeugbeleuchtungseinrichtung mit einer solchen automatischen Abblendfunktion umfasst wenigstens einen (im Falle eines Motorrads) bzw. zwei oder mehr Scheinwerfer (im Falle eines Automobils oder LKWs), wobei der Scheinwerfer mindestens ein Leuchtmittel in Form wenigstens einer LED aufweist. Ferner ist eine das Kraftfahrzeugvorfeld aufnehmende digitale Bildaufnahmeeinrichtung, also ein Bildaufnahmechip (z. B. ein CCD-Chip oder ein CMOS-Chip) vorgesehen, der zyklisch einzelne Bilder liefert, d. h., dass die digitale Bildaufnahmeeinrichtung getaktet ausgelesen wird und mit jedem Auslesetakt ein Einzelbild erzeugt respektive geliefert wird. Ferner ist eine mit der Bildaufnahmeeinrichtung kommunizierende Steuerungseinrichtung vorgesehen, die anhand der Bilder die Verkehrssituation ermittelt und in Abhängigkeit des Ermittlungsergebnisses die LED zum Abblenden ansteuert. Die Steuerungseinrichtung wertet hierzu die gelieferten Bilder aus und ermittelt, ob in diesen ein entgegenkommendes oder vorausfahrendes Kraftfahrzeug gezeigt ist, aufgrund dessen, gegebenenfalls bei Vorliegen weiterer Parameter, ein Abblenden des oder der eigenen Scheinwerfer erforderlich ist. Falls dem so ist, steuert die Steuerungseinrichtung die LED entsprechend an, um beispielsweise vom zugeschalteten Fernlichtmodus in den Abblendlichtmodus zu wechseln, oder um beispielsweise bei Verwendung mehrerer LEDs lokale Helligkeitsunterschiede zur Vermeidung einer Blendung zu erzeugen.

Problematisch im Rahmen der Auswertung der aufgenommenen Einzelbilder zur Ermittlung etwaiger Lichtquellen im jeweils gezeigten Bild ist jedoch, dass in den Bildern nicht nur selbstleuchtende Lichtquellen, also Scheinwerfer entgegenkommender Scheinwerfer oder Rücklichter vorausfahrender Fahrzeuge, sondern auch reflektiertes Licht, das von passiven Reflektoren wie Verkehrsschildern oder Begrenzungspfosten zurückgeworfen wird, als Lichtfeld im Kamerabild sichtbar ist. Nachdem die Steuerungseinrichtung in den Einzelbildern nach hellen Bereichen, also Lichtpunkten sucht, besteht das Problem, dass auch reflektiertes Licht als eine selbst leuchtende Lichtquelle angesehen wird und es zu einer fehlerhaften Einschätzung der Verkehrssituation und daraus resultierend einem möglicherweise nicht erforderlichen Abblendvorgang kommt.

Da üblicherweise die absolute Helligkeit eines Lichtpunktes als Erkennungsmerkmal für eine selbstleuchtende Lichtquelle dient, mithin aber verschmutzte Frontscheinwerfer oder Rückleuchten eines Fahrzeugs häufig zu relativ dunklen Lichtpunkten führen, kann es sogar sein, dass das reflektierte Licht zu einem helleren Bereich im Kamerabild führt als eine selbstleuchtende entgegenkommende oder vorausfahrende Lichtquelle, weshalb die absolute Helligkeit kein ausreichendes Erkennungsmerkmal ist. Dies gilt auch für die Farbe des Lichtpunkts, beispielsweise sind Rücklichter zumeist rot. Dennoch gibt es häufig reflektierende farbige Straßenrandbegrenzungen, so dass auch dies kein sicheres Unterscheidungs- oder Erkennungskriterium ist. Ein weiteres Erkennungs- oder Unterscheidungskriterium ist die Bewegung des Lichtpunkts im Bild, nachdem sich eine entgegenkommende oder vorausfahrende Lichtquelle selbst bewegt. Jedoch sollen auch stehende oder haltende Fahrzeuge nicht geblendet werden, d. h., dass folglich auch solche sich momentan nicht bewegenden, jedoch selbstleuchtenden Lichtquellen eindeutig identifiziert werden müssen, was aber, da passive Reflektoren in der Regel ebenfalls lagefest sind, wiederum kein eindeutiges Unterscheidungskriterium ist.

Ein Scheinwerfer mit einer solchen gesteuerten Abblendfunktion ist beispielsweise aus DE 10 2006 059 064 A1 bekannt. Dort wird die Strahlungsenergie des Lichtbündels zeitlich variiert, was beispielsweise durch zyklisches Bewegen eines Abblendelements vor das Leuchtmittel oder durch entsprechende Ansteuerung des Leuchtmittels selbst erfolgt. Entsprechend dieser zeitlichen Variation der Strahlungsenergie wird weiterhin die Erfassung der Bildinformation gesteuert. Konkret heißt das, dass kontinuierlich zwischen einer Hellphase, wenn das Lichtbündel die hohe oder maximale Strahlungsenergie aufweist, und einer Dunkelphase, wenn es abgeblendet ist, gewechselt wird, wobei die Erfassung der Bildinformation in der Dunkelphase erfolgt. Bilder werden also quasi nur dann aufgenommen, wenn das eigene Leuchtmittel abgeblendet ist. Hierdurch soll unter anderem vermieden werden, dass Reflexionen der eigenen Beleuchtung, also Reflexionen des vom Scheinwerfer emittierten und beispielsweise von Reflektoren oder Verkehrsschildern und Ähnlichem reflektierten Lichts, zu Fehlanalysen führen, weil sie als Scheinwerfer entgegenkommender oder Rücklichter vorausfahrender Fahrzeuge gewertet werden. Wenn Bilder, die der Analyse der Verkehrssituation, also der Erfassung entgegenkommender oder vorausfahrender Fahrzeuge, dienen nur in der Dunkelphase aufgenommen werden, also dann, wenn das eigene Leuchtmittel abgeblendet oder ausgeschaltet ist, können solche Schwierigkeiten durchaus vermieden werden. Gleichwohl ist zum einen die exakte Ansteuerung des Leuchtmittels respektive des Abblendelements sowie der Kamera, die vom jeweiligen Arbeitstakt her einander zwingend bedingen und aufeinander abgestellt respektive synchronisiert sind, komplex, zum andere ergibt sich aufgrund der Taktabhängigkeit voneinander nur ein reduzierter Beleuchtungs- und Bildaufnahmebetrieb. DE102007026750 offenbart auch einen Scheinwerfer und ein Verfahren mit den Merkmalen des Oberbegriffs des Anspruchs 1.

Der Erfindung liegt damit das Problem zugrunde, ein Verfahren anzugeben, das auf sichere Weise eine Klassifizierung von in Einzelbildern gezeigten Lichtpunkten oder Lichtbereichen im Fahrzeugvorfeld ermöglicht, um eine sichere Entscheidungsgrundlage für einen etwaigen Abblendvorgang zu schaffen.

Zur Lösung dieses Problems ist bei einem Verfahren der eingangs genannten Art erfindungsgemäß vorgesehen, dass die Frequenz, mit der der Leuchtbetrieb der LED moduliert wird, anders ist als die Frequenz, mit der die einzelnen Bilder erzeugt werden, so dass sich bei Erfassung des von einem Gegenstand als Reflexionslicht abgestrahlten Licht des eigenen Scheinwerfers in den nacheinander aufgenommenen Einzelbildern eine vom Frequenzunterschied abhängige Helligkeitsänderung zeigt, während bei Erfassung von Licht einer nicht oder andersartig modulierten Lichtquelle keine oder eine nicht von dem Frequenzunterschied abhängige Helligkeitsänderung erfasst wird, wobei die Steuerungseinrichtung durch Auswertung mehrerer zeitlich nacheinander aufgenommener Einzelbilder die Verkehrssituation ermittelt.

Bei dem erfindungsgemäßen Verfahren werden das Leuchtmittel, also die LED, und die Bildaufnahmeeinrichtung, also beispielsweise der Bildaufnahmechip, mit jeweils unterschiedlichen Frequenzen betrieben. D. h., dass die LED mit einer ersten Frequenz moduliert wird, mithin also mit dieser Frequenz getaktet ein- und ausgeschaltet wird respektive getaktet in ihrer Helligkeit zwischen zwei verschiedenen Helligkeitsstufen moduliert wird. Mit einer anderen Frequenz, also mit einem anderen Auslesetakt, wird die Bildaufnahmeeinrichtung betrieben, d. h., dass mit dieser Frequenz oder diesem Takt die Einzelbilder von der Bildaufnahmeeinrichtung geliefert respektive dort ausgelesen werden. Die jeweiligen Frequenzen bzw. Takte sind dabei so gewählt, dass sich die Intervalle, in denen die LED beispielsweise angeschaltet ist, und die Intervalle, in denen eine Belichtung der Bildaufnahmeeinrichtung stattfindet, immer zeitlich überlappen, jedoch infolge des Frequenzunterschieds sich kein konstanter Überlappungszeitraum einstellt. Dabei ist die LED hochfrequent modulierbar, d.h., sie kann sehr schnell (mehr als 100 x pro Sekunde) an- und ausgeschaltet respektive in ihrer Helligkeit verändert werden. Diese hochfrequenten Schaltvorgänge sind für den Menschen aufgrund der Trägheit des Auges nicht wahrnehmbar. In Einzelbildern können sie jedoch detektiert werden. In entsprechend hohem Takt kann gleichermaßen die Bildaufnahmeeinrichtung ausgelesen werden, d. h., dass auch der Auslesetakt hochfrequent ist.

Wenn nun die Schaltzyklen einer modulierten Lichtquelle nicht synchron mit den Auslesezyklen einer aufnehmenden Bildaufnahmeeinrichtung wie beispielsweise einer Videokamera sind, so ergibt sich zwischen dem Schaltzyklus der Lichtquelle und dem Auslesezyklus der Bildaufnahmeeinrichtung eine Schwebung, die dazu führt, dass die Lichtquelle im Kamerabild über die Zeit unterschiedlich hell wahrgenommen wird. Denn infolge der variierenden "Überlappungszeiträume" zwischen den Modi "Lichtquelle-An" und "Belichtung-An" werden bildaufnahmeeinrichtungseitige zwangsläufig über die Zeit unterschiedliche beleuchtungsabhängige Signale in jeweiligen Einzelbildern generiert. Diese Helligkeitsänderungen können also in den Einzelbildern detektiert werden.

Wird nun das vom eigenen Scheinwerfer abgegebene Licht von einem Reflektor reflektiert, so zeigt sich in den Einzelbildern die beschriebene Helligkeitsänderung des hellen Bildbereichs. Demgegenüber zeigt ein heller Bereich, der von einer Lichtquelle eines entgegenkommenden Scheinwerfers oder eines vorausfahrenden Rücklichts stammt, die beispielsweise nicht moduliert ist, keinen Helligkeitsunterschied, ist also in nacheinander aufgenommenen Einzelbildern stets gleich hell. Hierüber kann also zwangsläufig eine hochgenaue Klassifizierung erfolgen, dahingehend, ob es sich in mehreren zeitlich nacheinander aufgenommenen Einzelbildern um einen Leuchtbereich handelt, der von einem selbstleuchtenden Leuchtmittel stammt, handelt, oder um ein Reflexionslicht.

Auch für den Fall, dass der entgegenkommende Scheinwerfer ebenfalls moduliert angesteuert wird, kann eine genaue Unterscheidung erfolgen. Denn die auch dann in den Einzelbildern erfasste Helligkeitsänderung, die in diesem Fall aus dem Frequenzunterschied der Modulationsfrequenz des entgegenkommenden Scheinwerfers und der Auslesefrequenz der eigenen Bildaufnahmeeinrichtung resultiert, steht in keinem Zusammenhang mit dem Frequenzunterschied zwischen der eigenen Modulationsfrequenz und der Auslesefrequenz. D. h., dass sogar solche Scheinwerfer eindeutig erfasst werden können, die selbst getaktet betrieben werden.

Insgesamt wird also ein Verfahren zur Klassifizierung eines im Vorfeld eines Kraftfahrzeugs befindlichen Licht abstrahlenden Gegenstands angegeben, wobei das Kraftfahrzeug wie beschrieben wenigstens einen eigenen Licht abstrahlenden Scheinwerfer umfassend wenigstens eine LED aufweist, die über eine Steuerungseinrichtung in ihrer Helligkeit getaktet betrieben, also insbesondere ein- und ausgeschaltet wird, sowie eine Bildaufnahmeeinrichtung umfassend einen Bildaufnahmechip, der zur Aufnahme zeitlich aufeinanderfolgender Einzelbilder getaktet ausgelesen wird. Die Klassifizierung erfolgt über einen Unterschied des Betriebstakts der LED zum Auslesetakt des Bildaufnahmechips, so dass sich bei Erfassung des von einem Gegenstand als Reflexionslicht abgestrahlten Lichts des eigenen Scheinwerfers in den nacheinander aufgenommenen Einzelbildern eine vom Taktunterschied abhängige Helligkeitsänderung, also eine Schwebung zeigt, während bei Erfassung von Licht einer nicht oder andersartig getakteten Lichtquelle keine oder einen nicht von dem Taktunterschied abhängige Helligkeitsänderung einstellt.

Zweckmäßig ist es, wenn im Rahmen der Bildauswertung die Modulationsfrequenz und die Bildaufnahmefrequenz berücksichtigt werden. Dies ist insbesondere dann zweckmäßig, wenn der entgegenkommende Scheinwerfer ebenfalls moduliert betrieben wird, da die beschriebene, sich in den auszuwertenden Einzelbildern auch dann einstellende Helligkeitsänderung zeitlich mit einem anderen Muster variiert, als es sich aus dem Frequenzunterschied der eigenen Betriebstakte ergibt.

Dabei ist es durchaus denkbar, dass bei Erfassung einer Helligkeitsänderung in den Einzelbildern zur Plausibilisierung, ob es sich nun tatsächlich um ein Reflexionslicht handelt, oder um ein ebenfalls getaktet betriebenes anderes Leuchtmittel, die Modulationsfrequenz der eigenen LED kurzzeitig variiert wird. Eine solche kurzzeitige Variation müsste sich, wenn es sich um Reflexionslicht handelt, in einer unmittelbaren referenzierten Änderung der Helligkeitsvariation in den Einzelbildern äußern, da das Reflexionslicht ja mit dem gleichen Takt zurückgeworfen wird, wie es vom eigenen Leuchtmittel emittiert wird. Hierüber kann auch eine Verbesserung der Erfassung eines ebenfalls moduliert betriebenen entgegenkommenden Scheinwerfers erreicht werden, insbesondere, wenn dieser mit einer Modulationsfrequenz, die nahe an der eigenen Modulationsfrequenz liegt, betrieben wird. Denn der entgegenkommende Scheinwerfer vollzieht zwangsläufig die eigene Modulationsfrequenzänderung, die durchaus auch relativ groß sein kann, also einen beachtlichen Frequenzsprung zeigen kann, nicht mit. Dies äußert sich wiederum in den daraufhin aufgenommenen Helligkeitsvariationen in den Einzelbildern.

Die Modulationsfrequenz und die Bildaufnahmefrequenz selbst besitzen keinen gemeinsamen ganzzahligen Teiler. Hierüber wird vermieden, dass es aufgrund der Frequenzunterschiede und damit der Phasenverschiebungen zu Momenten kommt, in denen die Lichtquelle zwar an ist, die Belichtung der Kamera jedoch aufgrund eines momentanen Auslesevorgangs nicht erfolgt und es infolge der Kürze des An-Intervalls zu überhaupt keiner Belichtung kommt.

Wie beschrieben ist es denkbar, grundsätzlich die Modulationsfrequenz zu verändern, wenn dies beispielsweise aus Plausibilitätsgründen erforderlich ist. Unabhängig davon ist es ferner zweckmäßig, die Modulationsfrequenz in Abhängigkeit der Bildaufnahmefrequenz zu verändern, insbesondere, wenn es mitunter zu leichten Schwankungen der Bildaufnahmefrequenz, also der Auslesefrequenz, kommt, um zu vermeiden, dass der Fall eintritt, dass beide gleich sind. Denkbar ist es im umgekehrten Fall aber auch, die Bildaufnahmefrequenz in Abhängigkeit der Modulationsfrequenz zu verändern. Dabei können beide Frequenzen synchronisiert sein, also in einem festen Verhältnis zueinander stehen, was beispielsweise über die Steuerungseinrichtung entsprechend vorgegeben respektive eingestellt werden kann.

Neben dem Verfahren betrifft die Erfindung ferner ein Kraftfahrzeug mit einer Beleuchtungseinrichtung mit automatischer Abblendfunktion, umfassend wenigstens einen Scheinwerfer mit einem Leuchtmittel in Form wenigstens einer LED, eine das Kraftfahrzeugvorfeld aufnehmende digitale Bildaufnahmeeinrichtung, die zyklisch einzelne Bilder liefert, und eine mit der Bildaufnahmeeinrichtung kommunizierende Steuerungseinrichtung, die anhand der Bilder die Verkehrssituation ermittelt und in Abhängigkeit des Ermittlungsergebnisses die LED zum Abblenden ansteuert. Das Kraftfahrzeug zeichnet sich dadurch aus, dass die Steuerungseinrichtung den Leuchtbetrieb der LED mit einer Frequenz moduliert, die anders ist als die Frequenz, mit der die einzelnen Bilder erzeugt werden, derart, dass sich bei Erfassung des von einem Gegenstand als Reflexionslicht abgestrahlten Licht des eigenen Scheinwerfers in den nacheinander aufgenommenen Einzelbildern eine vom Frequenzunterschied abhängige Helligkeitsänderung zeigt, während bei Erfassung von Licht einer nicht oder andersartig modulierten Lichtquelle keine oder eine nicht von dem Frequenzunterschied abhängige Helligkeitsänderung erfasst wird, wobei die Steuerungseinrichtung die Verkehrssituation durch Auswertung mehrerer zeitlich aufgenommener Bilder ermittelt. D. h., dass das Kraftfahrzeug respektive die Steuerungseinrichtung, die den Betrieb des Fahrerassistenzsystems, also die automatische Abblendfunktion, steuert, zur Durchführung des oben beschriebenen Betriebsverfahrens bzw. Klassifizierungsverfahrens ausgebildet ist. Die "Verkehrssituation" wird durch die Bildanalyse dahingehend, ob Lichtquellen in den Bildern gezeigt sind, ermittelt. Wird also eine Lichtquelle ermittelt, die ein Abblenden erfordert, liegt eine das Abblenden verlangende Verkehrssituation vor.

Die Steuerungseinrichtung kann dabei zur Berücksichtigung der Modulationsfrequenz und der Bildaufnahmefrequenz im Rahmen der Bildauswertung ausgebildet sein, wie auch zum Verändern der Modulationsfrequenz, sei es grundsätzlich unabhängig von der Bildaufnahmefrequenz im Rahmen etwaiger Plausibilisierungsprüfungen, oder in Abhängigkeit der Bildaufnahmefrequenz, wobei auch eine unterschiedliche Abhängigkeit hinsichtlich der Frequenzänderung gegeben sein kann.

Der Scheinwerfer selbst umfasst mehrere, gegebenenfalls separat über die Steuerungseinrichtung ansteuerbare LEDs. Dies ermöglicht es, bei Bedarf auch nur einzelne LEDs oder LED-Gruppen im Rahmen des Abblendbetriebs anzusteuern und abzublenden, wobei dies wiederum über die Steuerungseinrichtung erfolgt, abhängig von der erfassten Verkehrssituation.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung zur Erläuterung des erfindungsgemäßen Verfahrens umfassend ein erfindungsgemäßes Kraftfahrzeug,
- Fig. 2: eine Prinzipdarstellung der unterschiedlichen Frequenzgänge der Leuchtmittelmodulation und der Auslesefrequenz der Bildaufnahmeeinrichtung,
- Fig. 3: ein Prinzipdiagramm zur Darstellung des Helligkeitsverlaufs eines Reflexionslichtpunkts in nacheinander aufgenommener Einzelbilder, und
- Fig. 4: ein Prinzipdiagramm zur Darstellung des Helligkeitsverlaufs eines entgegenkommenden, nicht modulierten Scheinwerfers.

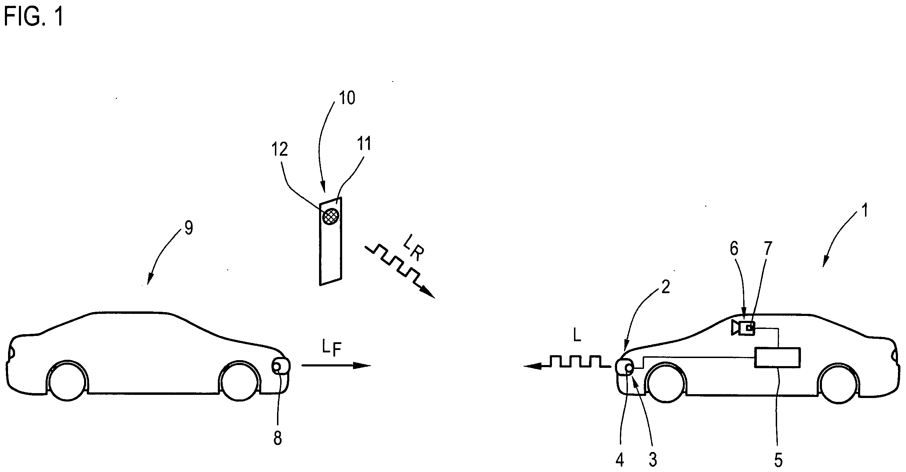

Fig. 1 zeigt ein erfindungsgemäßes Kraftfahrzeug 1, umfassend üblicherweise zwei Scheinwerfer 2, von denen hier nur einer gezeigt ist, jeweils mit einem Leuchtmittel 3 in Form üblicherweise mehrerer LEDs 4, die nach Art eines Arrays oder ähnlicher Gruppierung angeordnet sind. Die LEDs 4 werden über eine Steuerungseinrichtung 5 angesteuert. Hierzu werden sie getaktet beispielsweise an- oder ausgeschaltet, wobei die Frequenz beachtlich hoch ist, übliche Taktzyklen liegen bei über 100 Hz. Über die Steuerungseinrichtung 5 wird auch die Helligkeit der LEDs 4 gesteuert. Sollen die Scheinwerfer 2 im Abblendlichtmodus betrieben werden, werden die LEDs so gesteuert, dass die weniger Licht emittieren, als wenn die Scheinwerfer 2 im Fernlichtmodus betrieben werden sollen. Auch wird über die Steuerungseinrichtung 5 gegebenenfalls auch ein lokal unterschiedlicher Betrieb der einzelnen LEDs 4 gesteuert, um Bereiche im Fahrzeugvorfeld unterschiedlich auszuleuchten etc.

Vorgesehen ist ferner eine Bildaufnahmeeinrichtung 6, hier in Form einer Kamera, umfassend einen Bildaufnahmechip 7, der als digitales Bildaufnahmeelement zyklisch, also mit einem bestimmten Auslesetakt, digitale Einzelbilder liefert, die im gezeigten Beispiel an die Steuerungseinrichtung 5 gegeben werden. Die Steuerungseinrichtung 5 wertet die Einzelbilder aus, um in ihnen durch geeignete Auswertealgorithmen (z. B. Grauwertanalyse) Lichtpunkte oder Helligkeitsbereiche zu ermitteln, die anzeigen, dass im Fahrzeugvorfeld, das über die Bildaufnahmeeinrichtung 6 erfasst wird, selbstleuchtende Leuchtmittel vorhanden sind, also entgegenkommende Fahrzeuge oder vorausfahrende Fahrzeuge, die erfordern, dass die LEDs 4, die beispielsweise momentan im Fernlichtmodus betrieben werden, automatisch umgeschaltet und fortan im Abblendlichtmodus betrieben werden, um eine Blendung zu vermeiden.

Die Steuerungseinrichtung 5 ist darüber hinaus in der Lage, in den Einzelbildern zu ermitteln, ob es sich bei einem gefundenen Lichtpunkt oder Helligkeitsbereich um einen solchen handelt, der von einem entgegenkommenden Scheinwerfer, also einem eigenständig leuchtenden Leuchtmittel generiert wurde, oder um einen Lichtpunkt oder Helligkeitsbereich, der von Reflexionslicht, also von reflektiertem, vom eigenen Scheinwerfer abgestrahlten Licht generiert wurde.

Zu diesem Zweck werden die LEDs 4 mit einer bestimmten Frequenz getaktet angesteuert, sie werden also, wie durch den Pfeil L dargestellt ist, getaktet an- und ausgeschaltet.

Demgegenüber wird das Leuchtmittel 8 eines entgegenkommenden Kraftfahrzeugs 9 beispielsweise kontinuierlich betrieben, es handelt sich beispielsweise um eine übliche Halogen- oder Xenonlampe, die kontinuierlich Licht emittiert, wie durch den geraden Pfeil L_{F} (L_{F} = Fremdlicht) angedeutet ist.

Ferner ist in Fig. 1 ein Drittgegenstand 10, hier beispielsweise ein Begrenzungspfosten 11 gezeigt, an dem ein Reflektor 12 angeordnet ist. Dieser wird mit vom eigenen Kraftfahrzeug 1 emittierten Licht angestrahlt, er reflektiert dieses als Reflexionslicht L_{R} zurück, wie Fig. 1 zeigt.

Da sich sowohl das Kraftfahrzeug 9 als auch der Begrenzungspfosten 11 im Aufnahmebereich der Bildaufnahme 6, beispielsweise einer üblichen Videokamera, befinden, können sie beide zu entsprechenden hellen Bereichen in den nacheinander aufgenommenen Einzelbildern führen.

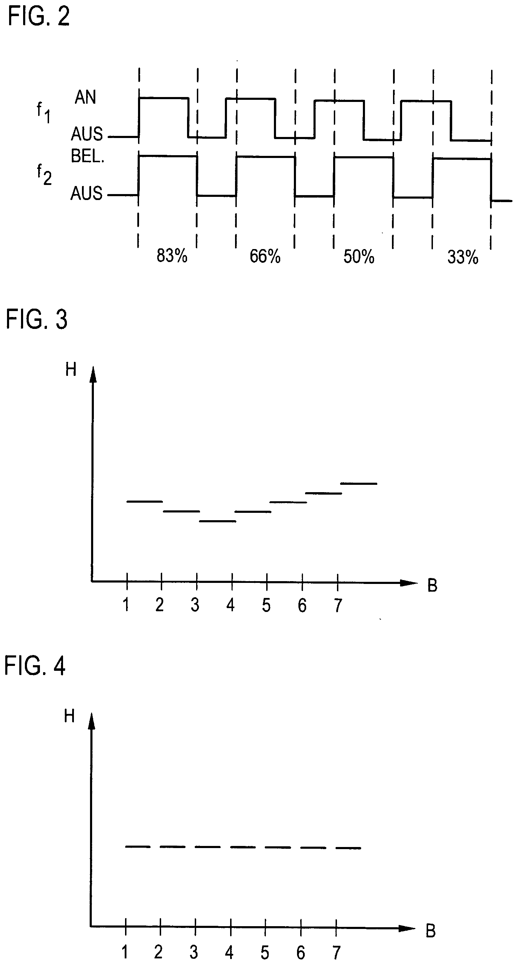

Um eine sichere Erkennung respektive Klassifizierung dahingehend, ob es sich bei einem in den Einzelbildern gezeigten hellen Bereichen um einen solchen handelt, der von einem entgegenkommenden Scheinwerfer oder vorausfahrenden Rücklicht, also von Fremdlicht L_{F} erzeugt wurde, oder von reflektiertem Licht L_{R} erzeugt wurde, werden die LEDs 4 mit einer ersten Frequenz f₁ angesteuert, die unterschiedlich ist wie die Frequenz f₂, mit der die Bildaufnahmeeinrichtung 6 respektive der Bildaufnahmechip 7 ausgelesen wird, also mit der die Einzelbilder erzeugt werden. Die unterschiedlichen Frequenzgänge sind exemplarisch in Fig. 2 gezeigt. Die obere Linie zeigt den Modulationstakt der LEDs 4, sie zeigt folglich die Frequenz f₁. Die untere Linie zeigt den Auslesetakt und daraus resultierend den Belichtungstakt der Bildaufnahmeeinrichtung 6 und folglich die Auslese- respektive Belichtungsfrequenz f₂. Es sei angenommen, dass f₁ < f₂ ist. Wie dieses Prinzipdiagramm zeigt, ändert sich mit der Zeit der "Überlappungsgrad" der einzelnen Zeitintervalle, in denen die LEDs an sind und in denen der Chip 7 belichtet wird. Unter den Kurven sind die jeweiligen "Überdeckungsprozentzahlen" angegeben, die also letztlich angeben, wie lange die LEDs zeitgleich mit der Belichtung der Bildaufnahmeeinrichtung an sind.

Befindet sich nun im Fahrzeugvorfeld ein Reflektor 12, so wird das Licht mit derselben Frequenz f₁ zurückgeworfen, mit der es ausgesendet wurde. D. h., dass die Prozentzahlen letztlich auch die variierende Helligkeit des Leuchtbereichs in den jeweiligen einzelnen Kamerabildern auszeigen, wobei diese Prozentzahlen selbstverständlich keine Absolutwerte, sondern lediglich Relativwerte sind. Ersichtlich kommt es infolge der unterschiedlichen Frequenz respektive Schaltzyklen zu einer Schwebung, die dazu führt, dass der helle Bereich im Kamerabild über die Zeit unterschiedliche Helligkeitswerte annimmt.

In Fig. 3 ist exemplarisch ein Diagramm, das diese unterschiedlichen Helligkeitsstufen zeigt, dargestellt. Längs der Abszisse sind die fortlaufenden Einzelbilder B über die Zeit t angegeben, längs der Ordinate die Helligkeit H. Exemplarisch zeigen die einzelnen Markierungen die variierende Helligkeit eines vom Reflexionslicht L_{R} erzeugten Helligkeitsbereichs in den einzelnen Einzelbildern an.

Die Fig. 4 zeigt demgegenüber den Helligkeitsverlauf eines Leuchtbereichs in den Einzelbildern B, welcher Leuchtbereich von nicht moduliertem, konstantem Fremdlicht L_{F} erzeugt wird. Ersichtlich bleibt das Helligkeitsniveau konstant. Dies resultiert daraus, dass während der Belichtungszeit der Bildaufnahmeeinrichtung 6 näherungsweise stets die gleiche Lichtmenge vom Bildaufnahmechip 7 erfasst wird, da die Fremdlichtquelle kontinuierlich Licht emittiert, also nicht getaktet ist.

Die entsprechende Analyse der Einzelbilder zur Ermittlung des Helligkeitsverlaufs eines erfassten Helligkeitsbereichs in den Einzelbildern nimmt die Steuerungseinrichtung 5 vor. Diese ist also in der Lage, zu ermitteln, ob es sich bei einem hellen Bereich um einen solchen handelt, der von einem entgegenkommenden Scheinwerfer, also vom Fremdlicht L_{F} erzeugt wurde, oder um einen hellen Bereich, der von Reflexionslicht L_{R} erzeugt wurde. Wird letzteres detektiert, so ist eine Änderung des Betriebsmodus der LEDs 4 nicht erforderlich, da keine Verkehrssituation erfasst wurde, die ein Abblenden erfordert. Wird jedoch ein heller Bereich erfasst, der von Fremdlicht L_{F} erzeugt wurde, so kann, je nachdem, ob gegebenenfalls noch weitere Randbedingungen erfüllt sind, vom Fernlicht- in den Abblendmodus über die Steuerungseinrichtung 5 umgeschaltet werden. Die Anzahl der auszuwertenden Einzelbilder kann letztlich beliebig gewählt werden, dies ist von der Arbeitsgeschwindigkeit der Steuerungseinrichtung 5 und der Bildaufnahmefrequenz abhängig. Ein durchschnittlicher Belichtungszyklus einer üblichen Videokamera beträgt beispielsweise 25 ms. Innerhalb dieser 25 ms erfolgt die Belichtung, beispielsweise über eine Dauer von 20 ms, während in den verbleibenden 5 ms die Daten von dem Bildaufnahmechip 7 ausgelesen werden. Ein Modulationszyklus der LEDs kann in diesem Fall beispielsweise 17 ms betragen. Die LEDs werden in diesem Fall beispielsweise für 12 ms angeschaltet und für 5 ms ausgeschaltet. D. h., dass bei diesem Beispiel die Dauer, während welcher die LEDs aus sind und während welcher der Bildaufnahmechip 7 ausgelesen werden, gleich ist. Dies ist jedoch nicht zwingend, das Beispiel ist keinesfalls beschränkend.

Die Steuerungseinrichtung 5 berücksichtigt bei der Auswertung der Einzelbilder bevorzugt die Modulationsfrequenz der LEDs 4 wie auch die Ausleserespektive Belichtungsfrequenz des Bildaufnahmechips 7. Diese gehen dann in die Beurteilung, ob es sich um einen Fremdlichtbereich oder einen Reflexionslichtbereich handelt, ein, wenn das Leuchtmittel 8 des entgegenkommenden Kraftfahrzeugs ebenfalls getaktet ist. Es ist anzunehmen, dass der Takt des Fremdleuchtmittels 8 ein anderer ist als der des eigenen Leuchtmittels, also der LEDs 4. Sind seitens der Steuerungseinrichtung 5 der eigene Modulationstakt wie auch der Auslesetakt bekannt, kann ermittelt werden, ob die dann auch aus dem Fremdlicht resultierende Helligkeitsänderung dem eigenen Taktunterschied folgt, oder nicht. Somit kann auch dann, wenn das Fremdfahrzeug über eine vergleichbare Modulation des Leuchtmittel 8 verfügt, eine sichere Klassifizierung dahingehend, ob es sich um eine Fremdlichtquelle oder eine Reflexionslichtquelle handelt, erfolgen.

Weiterhin kann die Steuerungseinrichtung 5 die Modulationsfrequenz der LEDs 4 bei Bedarf auch verändern, beispielsweise um eine Plausibilitätsprüfung durchzuführen. Wird beispielsweise eine Helligkeitsvariation ermittelt, so kann durch kurzzeitiges Anheben oder Absenken der Modulationsfrequenz der eigenen LEDs sofort überprüft werden, ob es sich tatsächlich um Reflexionslicht handelt. Denn diese Modulations- oder Frequenzänderung muss, wenn es sich um Reflexionslicht handelt, zwangsläufig zu einer sofortigen Anpassung der Helligkeitsänderung in den nachfolgend aufgenommenen Einzelbildern an den geänderten Takt führen.

## Patentansprüche

1. Verfahren zum Betrieb einer Kraftfahrzeugbeleuchtungseinrichtung mit automatischer Abblendfunktion, umfassend wenigstens einen Scheinwerfer (2) mit einem Leuchtmittel (3) in Form wenigstens einer LED (4), eine das Kraftfahrzeugvorfeld aufnehmende digitale Bildaufnahmeeinrichtung (6), die zyklisch einzelne Bilder liefert, und eine mit der Bildaufnahmeeinrichtung (6) kommunizierende Steuerungseinrichtung (5), die anhand der Bilder die Verkehrssituation ermittelt und in Abhängigkeit des Ermittlungsergebnisses die LED (4) zum Abblenden ansteuert, **dadurch gekennzeichnet,**
**dass** die Frequenz (f₁), mit der der Leuchtbetrieb der LED (4) moduliert wird, anders ist als die Frequenz (f₂), mit der die einzelnen Bilder erzeugt werden, so dass sich bei Erfassung des von einem Gegenstand (10) als Reflexionslicht (L_{R}) abgestrahlten Licht des eigenen Scheinwerfers (2) in den nacheinander aufgenommenen Einzelbildern eine vom Frequenzunterschied abhängige Helligkeitsänderung zeigt, während bei Erfassung von Licht (L_{F}) einer nicht oder andersartig modulierte Lichtquelle (8) keine oder eine nicht von dem Frequenzunterschied abhängige Helligkeitsänderung erfasst wird, wobei die Steuerungseinrichtung (5) durch Auswertung mehrerer zeitlich nacheinander aufgenommener Einzelbilder die Verkehrssituation ermittelt, wobei die Modulationsfrequenz und die Bildaufnahmefrequenz keinen gemeinsamen ganzzahligen Teiler besitzen.

2. Verfahren nach Anspruch 1,
**dadurch gekennzeichnet,**
**dass** im Rahmen der Bildauswertung die Modulationsfrequenz und die Bildaufnahmefrequenz berücksichtigt wird.

3. Verfahren nach Anspruch 1 oder 2,
**dadurch gekennzeichnet,**
**dass** die Modulationsfrequenz in Abhängigkeit der Bildaufnahmefrequenz veränderbar ist, oder umgekehrt.

4. Kraftfahrzeug mit einer Beleuchtungseinrichtung mit automatischer Abblendfunktion, umfassend wenigstens einen Scheinwerfer (2) mit einem Leuchtmittel (3) in Form wenigstens einer LED (4), eine das Kraftfahrzeugvorfeld aufnehmende digitale Bildaufnahmeeinrichtung (6), die zyklisch einzelne Bilder liefert, und eine mit der Bildaufnahmeeinrichtung (6) kommunizierende Steuerungseinrichtung (5), die anhand der Bilder die Verkehrssituation ermittelt und in Abhängigkeit des Ermittlungsergebnisses die LED (4) zum Abblenden ansteuert,
**dadurch gekennzeichnet,**
**dass** die Steuerungseinrichtung (5) den Leuchtbetrieb der LED (4) mit einer Frequenz (f₁) moduliert, die anders ist als die Frequenz (f₂), mit der die einzelnen Bilder erzeugt werden, derart, dass sich bei Erfassung des von einem Gegenstand (10) als Reflexionslicht (L_{R}) abgestrahlten Licht des eigenen Scheinwerfers (2) in den nacheinander aufgenommenen Einzelbildern eine vom Frequenzunterschied abhängige Helligkeitsänderung zeigt, während bei Erfassung von Licht (L_{F}) einer nicht oder andersartig modulierten Lichtquelle (8) keine oder eine nicht von dem Frequenzunterschied abhängige Helligkeitsänderung erfasst wird, wobei die Steuerungseinrichtung (5) die Verkehrssituation durch Auswertung mehrerer zeitlich nacheinander aufgenommener Bilder ermittelt, wobei die Steuerungseinrichtung (5) zur Steuerung des Leuchtbetriebs der LED (4) derart ausgebildet ist, dass die Modulationsfrequenz und die Bildaufnahmefrequenz keinen gemeinsamen ganzzahligen Teiler besitzen.

5. Kraftfahrzeug nach Anspruch 4,
**dadurch gekennzeichnet,**
**dass** die Steuerungseinrichtung (5) zur Berücksichtigung der Modulationsfrequenz und der Bildaufnahmefrequenz im Rahmen der Bildauswertung ausgebildet ist.

6. Kraftfahrzeug nach Anspruch 4 oder 5,
**dadurch gekennzeichnet,**
**dass** die Steuerungseinrichtung (5) zum Verändern der Modulationsfrequenz in Abhängigkeit der Bildaufnahmefrequenz, oder umgekehrt, ausgebildet ist.

7. Kraftfahrzeug nach einem der Ansprüche 4 bis 6,
**dadurch gekennzeichnet,**
**dass** der Scheinwerfer (2) mehrere, gegebenenfalls separat über die Steuerungseinrichtung (5) ansteuerbare LEDs (4) umfasst.

## Claims

1. Method for operating a motor vehicle illumination unit having an automatic dimming function, comprising at least one headlight (2) with illumination means (3) in the form of at least one LED (4), a digital image capturing unit (6) for capturing the area in front of the motor vehicle, which capturing unit cyclically provides individual images, and a control unit (5) communicating with the image capturing unit (6), which determines the traffic situation by means of the images and controls, as a function of the determination result, the LEDs (4) for dimming, **characterised in that** the frequency (f₁) with which the illumination operation of the LEDs (4) is modulated is different from the frequency (f₂) with which the individual images are generated, so that, if light from its own headlight (2), which is emitted from an object (10), is detected as reflection light (L_{R}), a change in brightness shows in the individual images captured one after another in temporal succession as a function of the difference in frequency, whereas in a case in which light (L_{F}) from a light source (8) that is either not modulated or is modulated in a different way is detected, no change in brightness or a change in brightness that is a function of the frequency difference is detected, wherein the control unit (5) determines the traffic situation by evaluating a plurality of individual images that are captured one after another in temporal succession, wherein the modulation frequency and the image capturing frequency do not have a common integer factor.

2. Method according to claim 1, **characterised in that** the modulation frequency and the image capturing frequency are taken into account within the context of the image evaluation.

3. Method according to claim 1 or 2, **characterised in that** the modulation frequency can be modified as a function of the image capturing frequency, or vice versa.

4. Motor vehicle having an illumination unit with an automatic dimming function, comprising at least one headlight (2) with illumination means (3) in the form of at least one LED (4), a digital image capturing unit (6) for capturing the area in front of the motor vehicle, which unit cyclically provides individual images, and a control unit (5) communicating with the image capturing unit (6), which determines the traffic situation by means of the images and controls, as a function of the determination result, the LEDs (4) for dimming, **characterised in that** the control unit (5) modulates the illumination operation of the LEDs (4) with a frequency (f₁) that differs from the frequency (f₂) with which the individual images are generated in such a way that in a case in which light from its own headlight (2), which is emitted by an object (10), is detected as reflection light (L_{R}), a change in brightness that is a function of the frequency difference shows in the individual images captured in succession, whereas in a case in which light (L_{F}) from a light source (8) that is either not modulated or is modulated in a different way is detected, no change in brightness or a change in brightness that is a function of the frequency difference is detected, wherein the control unit (5) determines the traffic situation by evaluating a plurality of images captured in temporal succession, wherein the control unit (5) for controlling the illumination operation of the LEDs (4) is designed such that the modulation frequency and the image capturing frequency do not have a common integer factor.

5. Motor vehicle according to claim 4, **characterised in that** the control unit (5) is designed to take into account the modulation frequency and the image capturing frequency within the context of the image evaluation.

6. Motor vehicle according to claim 4 or 5, **characterised in that** the control unit (5) is designed to modify the modulation frequency as a function of the image capturing frequency, or vice versa.

7. Motor vehicle according to any one of claims 4 to 6, **characterised in that** the headlight (2) comprises a plurality of LEDs (4) that can, if desired, be separately controlled via the control unit (5).

## Revendications

1. Procédé de fonctionnement d'un dispositif d'éclairage de véhicule automobile avec une fonction de passage automatique en feux de croisement, comprenant au moins un projecteur (2) avec un moyen d'éclairage (3) sous la forme d'au moins une LED (4), un dispositif de prise de vue (6) numérique qui réalise des prises de vue de la zone située devant le véhicule automobile et qui fournit des images individuelles de manière cyclique et un dispositif de commande (5) qui communique avec le dispositif de prise de vue (6) et qui détermine la situation de circulation à l'aide des images et commande la LED (4) en fonction du résultat de la détermination pour qu'elle passe en feux de croisement,
**caractérisé en ce que** la fréquence (f₁) avec laquelle le fonctionnement d'éclairage de la LED (4) est modulée est différente de la fréquence (f₂) avec laquelle les images individuelles sont produites de telle sorte que, lors de la détection de la lumière du projecteur considéré (2) mais émise en tant que lumière réfléchie (L_{R}) par un objet (10) dans les images individuelles successivement enregistrées, une variation de luminosité dépendante de la différence de fréquence apparaît tandis que, lors de la détection d'une lumière (L_{F}) d'une source de lumière (8) non modulée ou différemment modulée, aucune variation de luminosité ou une variation de luminosité non dépendante de la différence de fréquence est détectée, le dispositif de commande (5) déterminant alors la situation de circulation en évaluant plusieurs images individuelles enregistrées successivement dans le temps, la fréquence de modulation et la fréquence de prise de vue n'ayant pas de diviseur entier commun.

2. Procédé selon la revendication 1, **caractérisé en ce que**, dans le cadre de l'évaluation d'image, la fréquence de modulation et la fréquence de prise de vue sont prises en compte.

3. Procédé selon la revendication 1 ou 2, **caractérisé en ce que** la fréquence de modulation peut être modifiée en fonction de la fréquence de prise de vue, ou inversement.

4. Véhicule automobile avec un dispositif présentant une fonction de passage automatique en feux de croisement, comprenant au moins un projecteur (2) avec un moyen d'éclairage (3) sous la forme d'au moins une LED (4), un dispositif de prise de vue (6) numérique qui réalise des prises de vue de la zone située devant le véhicule automobile et qui fournit des images individuelles de manière cyclique et un dispositif de commande (5) qui communique avec le dispositif de prise de vue (6) et qui détermine la situation de circulation à l'aide des images et commande la LED (4) en fonction du résultat de la détermination pour qu'elle passe en feux de croisement,
**caractérisé en ce que** le dispositif de commande (5) module le fonctionnement d'éclairage de la LED (4) avec une fréquence (f₁) qui est différente de la fréquence (f₂) avec laquelle les images individuelles sont produites de telle sorte que, lors de la détection de la lumière du projecteur considéré (2) mais émise en tant que lumière réfléchie (L_{R}) par un objet (10) dans les images individuelles successivement enregistrées, une variation de luminosité dépendante de la différence de fréquence apparaît tandis que, lors de la détection d'une lumière (L_{F}) d'une source de lumière (8) non modulée ou différemment modulée, aucune variation de luminosité ou une variation de luminosité non dépendante de la différence de fréquence est détectée, le dispositif de commande (5) déterminant alors la situation de circulation en évaluant plusieurs images individuelles enregistrées successivement dans le temps et le dispositif de commande (5) étant conçu pour commander le fonctionnement d'éclairage de la LED (4) de telle sorte que la fréquence de modulation et la fréquence de prise de vue n'ont pas de diviseur entier commun.

5. Véhicule automobile selon la revendication 4, **caractérisé en ce que** le dispositif de commande (5) est conçu pour prendre en compte la fréquence de modulation et la fréquence de prise de vue dans le cadre de l'évaluation d'image.

6. Véhicule automobile selon la revendication 4 ou 5, **caractérisé en ce que** le dispositif de commande (5) est conçu pour modifier la fréquence de modulation en fonction de la fréquence de prise de vue, ou inversement.

7. Véhicule automobile selon l'une des revendications 4 à 6, **caractérisé en ce que** le projecteur (2) comprend plusieurs LED (4) qui peuvent être commandées le cas échéant séparément par l'intermédiaire du dispositif de commande (5).
